# NEUE EUROPÄISCHE PATENTSCHRIFT

(11) **EP 2 608 968 B2**
(45) Veröffentlichungstag und Bekanntmachung des Hinweises auf die Entscheidung über den Einspruch: **17.09.2025**
(45) Hinweis auf die Patenterteilung: 08.04.2020
(21) Anmeldenummer: 11757544.9
(22) Anmeldetag: 22.08.2011
(51) Int. Cl.: B42D 15/00, D21H 21/40, D21H 21/42, D21H 21/48, D21H 27/32

(54) **WERTDOKUMENT MIT ZUMINDEST TEILWEISE EINGEBETTETEM SICHERHEITSELEMENT**
VALUE DOCUMENT HAVING AN AT LEAST PARTIALLY EMBEDDED SECURITY ELEMENT
DOCUMENT DE VALEUR AVEC ÉLÉMENT DE SÉCURITÉ AU MOINS PARTIELLEMENT INCORPORÉ

(30) Priorität: 27.08.2010 AT 14412010
(43) Veröffentlichungstag der Anmeldung: 03.07.2013
(73) Patentinhaber: Hueck Folien Gesellschaft m.b.H., 4342 Baumgartenberg (AT)
(72) Erfinder: MÜLLER, Matthias, 92699 Bechstrieth (DE); KOCHER, Christoph, CH-7302 Landquart (CH); GROB, Jakob, CH-7303 Mastrils (CH)
(74) Vertreter: KLIMENT & HENHAPEL
(86) Internationale Anmeldenummer: PCT/EP2011/004216
(87) Internationale Veröffentlichungsnummer: WO 2012/025216

(56) Entgegenhaltungen:
- WO-A1-98/13211
- WO-A2-2004/028825
- WO-A2-2004/049353
- WO-A2-2005/011998
- WO-A2-2006/125224
- DE-A1- 10 049 118
- DE-A1- 10 318 103
- DE-A1- 102005 021 514
- US-A- 5 393 099

## Beschreibung

### TECHNISCHES GEBIET

### STAND DER TECHNIK

Die Erfindung betrifft ein Verfahren zur Herstellung eines Sicherheitspapieres für Wertdokumente, insbesondere für ein zwei- oder mehrlagiges Wertdokument, beispielsweise eine Banknote, ein Wertpapier oder ein Ausweisdokument, mit einem zumindest teilweise eingebetteten Sicherheitselement in Form eines Transferelements.

Zwei- oder mehrlagige Wertdokumente werden im Allgemeinen aus Laminaten oder Verbunden hergestellt, die Schichten aus unterschiedlichen Materialien aufweisen.

Insbesondere Kombinationen aus Papier und Kunststoff in einem Laminat finden vielfältige Verwendung, da ein derartiges Laminat die Widerstandsfähigkeit von Papier erhöht, insbesondere verbesserte Reißfestigkeit, Verschmutzungsresistenz und dergleichen aufweist.

So ist beispielsweise aus EP 1 599 346 B ein Mehrschichtlaminat, das als Sicherheitspapier verwendbar ist, bekannt, das eine ggf. mehrlagig ausgebildete Kunststoffschicht mit einer Ober- und einer Unterseite und wenigstens eine mit der Kunststoffschicht verbundene Papierlage auf der Oberseite der Kunststoffschicht aufweist. Auf der Unterseite der Kunststoffschicht kann ebenfalls eine Papierlage situiert sein. Wenigstens in einer der Papierlagen und/oder in die Kunststoffschicht kann dabei ein Sicherheitsmerkmal in Form eines elektrischen, elektronischen, magnetischen oder optischen Informationsmittels oder eine Kombination davon eingebaut sein. Beispiele hierfür sind Wasserzeichen, Aufdrucke, Mikroperforationen, irisierende Farben, Melierfasern oder ähnliches.

Das Sicherheitspapier weist dabei eine Erscheinung und einen Griff wie Papier auf, aber bedeutend höhere Reißfestigkeit und Stabilität als Papier.

Aus WO 2004/028825 A ist ein Sicherheitspapier zur Herstellung von Wertdokumenten, wie Banknoten und dergleichen bekannt, das aus einem knitterbaren mehrschichtigen Substrat umfassend mindestens eine Papierschicht und mindestens eine Folie besteht.

Auf die Papierschicht können Sicherheitsmerkmale aufgebracht sein, beispielsweise in Form eines Aufdrucks, aber auch in Form von optisch variablen Elementen. Die Papieroberfläche wird anschließend ein- oder beidseitig mit einer Kunststofffolie zur Erhöhung der Verschmutzungsresistenz versehen. Weiters kann in die Papierschicht ein Sicherheitsfaden zumindest teilweise eingebettet sein oder zwischen der Papierschicht und der Kunststofffolie angeordnet sein.

Aus WO 2005/038135 A ist ein mehrschichtiges Sicherheitspapier bekannt, das aus mindestens zwei Papierschichten besteht, wobei eine der Papierschichten mindestens ein Sicherheitselement aufweist.

Die Einbettung von Sicherheitselementen, wie beispielweise Sicherheitsfäden in mehrlagige Sicherheitspapiere erweist sich als schwierig. Die mehrlagigen Sicherheitspapiere bestehen aus zwei oder mehr Lagen von zumeist unterschiedlichen Materialien mit unterschiedlichen Eigenschaften, beispielsweise aus Papier- und Kunststofflagen. Die einzelnen Lagen weisen eine im Vergleich zur Dicke eines einlagigen Sicherheitspapiers entsprechend geringere Dicke auf.

Sicherheitselemente, wie beispielsweise Sicherheitsfäden, können mit zahlreichen Sicherheitsmerkmalen ausgestattet werden, wie zum Beispiel Farbkippeffekte, Fluoreszenzeffekte, elektrisch leitfähige Eigenschaften, magnetische Eigenschaften, magnetische Codierungen, und dergleichen mehr.

Die Sicherheitsmerkmale lassen sich nahezu beliebig kombinieren, wodurch im Allgemeinen die Dicke des Sicherheitselementes aber zunimmt.

Unter Sicherheitsfaden wird nach dem Stand der Technik ein Aufbau verstanden, der zumindest ein folienartiges Trägersubstrat (beispielsweise eine Kunststofffolie) umfasst, auf das oder in das Sicherheitsmerkmale auf- oder eingebracht sind, wobei die Sicherheitsmerkmale gegebenenfalls durch ein weiteres folienartiges Trägersubstrat geschützt sind. Derartige Sicherheitsfäden sind in herkömmlichen Sicherheitspapieren seit geraumer Zeit und in den meisten Währungen weltweit im Einsatz. Aufgrund der Dicke des folienartigen Trägersubstrats, das eine ausreichende Stabilität im Herstell- und Verarbeitungsprozess sowie eine ausreichende Umlaufstabilität des Wertdokuments gewährleisten muss, liegt die Dicke solcher Sicherheitsfäden in der Regel zwischen 23 und 45 µm.

Aus der WO 2006/066431 A ist bekannt, dass in ein mehrlagiges Sicherheitsdrucksubstrat bestehend aus zwei dünnen Sicherheitspapierlagen und einer innenliegenden Polymerlage Sicherheitsfäden eingebracht werden können, die zwischen einer Sicherheitspapierlage und der innenliegenden Polymerlage zu liegen kommen. Die Dicke des Sicherheitsfadens trägt dabei zumindest teilweise zur Gesamtdicke des Drucksubstrates bei.

Sicherheitsfäden sind in der Regel auf ihrer Oberfläche beidseits mit einem Adhäsiv ausgerüstet, das die feste Verankerung im Wertdokument gewährleisten soll. Dabei handelt es sich gewöhnlich um einen Heißsiegelkleber, der bei der Papierproduktion aktiviert wird. Bei kurzer Wärmeeinwirkungsdauer reicht die Wärmeeinwirkungszeit oft nicht aus, um den Heißsiegelkleber auf dem Sicherheitsfaden soweit zu aktivieren, dass eine gute Verankerung erzielt wird. Dies gilt insbesondere für die Seite des Sicherheitsfadens, die auf die Papierlage zu liegen kommt.

Im Allgemeinen weist ein einlagiges Sicherheitspapier ein Flächengewicht von 80-110 g/m² bei einer Dicke von etwa 80 bis 130 µm auf. Eine einzelne Papierlage eines mehrlagigen Sicherheitspapiers weist typischerweise ein Flächengewicht von typischerweise 35 g/m² und eine Dicke von etwa 35 bis 50 µm auf, die Dicke einer innenliegenden Kunststofflage beträgt typischerweise 30 bis 40 µm bei einem Flächengewicht von ebenfalls 30 bis 40 g/m². Bei einem mehrlagigen Sicherheitspapier mit innenliegender Papierlage und aussenliegenden Kunststofflagen beträgt das Flächengewicht der Papierlage typischerweise 80 bis 100 g/m² und die Dicke der Kunststofflagen typischerweise 4 bis 12 µm. Sicherheitsfäden weisen - wie bereits erwähnt - im Allgemeinen eine Dicke von etwa 23 bis 45 µm auf und können daher in den dünnen Schichten des Sicherheitspapiers nur schwer verankert werden. Sie haben nur wenig Haftung in der betreffenden Schicht und treten sogar aus dieser Schicht hervor, da die Papierfasern den Sicherheitsfaden nicht vollständig bedecken können.

Versucht man dennoch, einen Sicherheitsfaden in ein Papier einzubetten, wobei sowohl die Papierlage als auch der Sicherheitsfaden ähnlich dick sind, und wickelt man anschließend eine Papierbahn zu einer größeren Rolle auf, so wird der lokale Dickenunterschied an der Stelle des eingebetteten Sicherheitsfadens bei jeder zusätzlichen Windung verstärkt. In der Fachsprache wird dieser Effekt oft als "Kolbenring" bezeichnet. In extremen Fällen kann es sogar zu partiellen Überdehnungen, Verblockungen (durch den lokal höheren Druck) oder Einrissen kommen. Noch deutlicher wirkt sich der zusätzliche Auftrag durch dicke Sicherheitsfäden aus, wenn eine Anzahl Bögen übereinander gestapelt werden. Durch die übereinander liegenden Fäden wird der Bogenstapel wellig, was die Weiterverarbeitung stark erschweren kann. Dem wirkt man üblicherweise dadurch entgegen, dass Sicherheitsfäden bei der Einbringung ins Sicherheitspapier oszilliert werden, so dass sie im Stapel nicht exakt übereinander liegen, sondern über einen Breitenbereich von beispielsweise 6 mm verteilt zu liegen kommen.

Ein wesentlicher Nachteil dieser Methode ist, dass eine Integration des Sicherheitsfadens ins übrige Design des Wertdokuments nicht möglich ist. Dies ist insbesondere dann störend, wenn die Position des Sicherheitsfadens in bestimmter Relation zu einem Sichtfenster oder auch zu einer einseitigen Öffnung in einem mehrlagigen Wertdokument stehen soll. Beispielsweise kann es wünschenswert sein, einen Sicherheitsfaden durch ein Sichtfenster eines mehrlagigen Wertdokumentes laufen zu lassen, wobei der Sicherheitsfaden in jedem einzelnen Wertdokument exakt durch die Mitte des Sichtfensters laufen soll. Muss der Sicherheitsfaden zur Verbesserung der Stapellage oszilliert werden, ist eine solche Designintegration nicht möglich.

Weist das Sicherheitspapier eine Ausnehmung in einer Sicherheitspapierlage oder eine Durchbrechung, also ein sogenanntes Fenster, auf, finden Sicherheitsfäden in diesen Bereichen noch weniger Haftung im Substrat. Der Sicherheitsfaden kann in diesen Bereichen sogar aus dem Substrat heraustreten, wenn die Haftung zu einer der Lagen schlecht ist. Dies verschlechtert die Nass- und Trockenfaltbarkeit des Wertdokuments, und somit auch die Umlaufbeständigkeit. Gleichzeitig werden Fälschungen erleichtert.

### DARSTELLUNG DER ERFINDUNG

Aufgabe der Erfindung war es daher, ein Verfahren zur Herstellung eines Wertdokuments bestehend aus einem zwei- oder mehrlagigen Sicherheitspapier mit einem zumindest teileise eingebetteten Sicherheitselement bereitzustellen, bei dem eine ausgezeichnete Verankerung im Substrat gegeben ist und die weiteren Nachteile des Standes der Technik vermieden werden.

Ein Ziel der Erfindung ist es, ein Sicherheitselement bereitzustellen, das mehrere Sicherheitsmerkmale in sich vereinen kann, aber wesentlich dünner ausgestaltet ist als ein herkömmlicher Sicherheitsfaden mit derselben Funktionalität.

Aufgabe der Erfindung ist es weiters, ein Verfahren bereitzustellen, bei dem die Verankerung des Sicherheitselements an oder in der Papierlage getrennt wird vom Prozess der Erzeugung des mehrlagigen Sicherheitspapiers.

Gegenstand der Erfindung ist daher eiters ein Verfahren zur Herstellung eines Sicherheitspapiers für Wertdokumente mit einem zumindest teilweise eingebetteten Transferelement, dadurch gekennzeichnet, dass das Transferelement in einem ersten Schritt auf einem Trägersubstrat zugeführt und auf eine innere Oberfläche einer Lage des Sicherheitspapiers unter Ablösung des Trägersubstrats appliziert und mittels einer Klebebeschichtung fixiert wird, und anschließend in einem oder mehreren nachfolgenden Schritt(en) eine oder mehrere weitere Lage(n) mit dieser ersten Lage verbunden werden, wobei zumindest eine der Lagen des Sicherheitspapiers mindestens eine Ausnehmung aufweist durch die das Sicherheitselement sichtbar ist, wobei das Transferelement seiten- und/oder längsregistergenau zu der mindestens einen Ausnehmung situiert ist und vorzugsweise in wenigstens teilweiser Überlappung mit dieser Ausnehmung situiert ist.

Beim erfindungsgemäßen Verfahren wird das Sicherheitselement in Form eines Transferelements in einem ersten Schritt auf eine der Lagen in einem Transferprozess aufgebracht. Das Transferelement wird diesem Prozess auf einem Trägersubstrat aufgebracht zugeführt, das Transferelement wird im Transferprozess mit der Papierlage in Kontakt gebracht und mit Druck und/oder erhöhter Temperatur auf die Papierlage übertragen respektive appliziert. Darunter ist zu verstehen, dass das Transferelement an der Papieroberfläche über eine stoffschlüssige Verbindung befestigt ist. Das Trägersubstrat wird in diesem Prozess abgezogen, so dass einzig das Transferelement auf der Papierlage verbleibt. In einem zweiten Schritt wird die Papierlage mit dem aufgebrachten Transferelement mit den weiteren Schichten verbunden.

Ein solches Transferelement kann in Form eines Streifens, Bandes oder Patches vorliegen. Es kann durchgehend oder unterbrochen sein oder ein durchgehendes oder unterbrochenes Design aufweisen. Es kann mit dem unbewehrten Auge sichtbar, unsichtbar, unter Zuhilfenahme von Hilfsmitteln sichtbar sowie maschinenlesbar sein.

Durch die erfindungsgemäße Variante kann eine Designintegration, bei der das Transferelement beispielsweise exakt durch ein Fenster laufen soll, sehr wohl realisiert werden, da die Dicke des Transferelements wesentlich geringer ist als die Dicke eines Sicherheitsfadens gemäß des Standes der Technik mit denselben Funktionalitäten und daher eine Oszillation des Sicherheitselements unterbleiben kann.

Ein weiterer Vorteil des erfindungsgemäß hergestellten Wertdokuments liegt in seiner hohen Manipulationsresistenz. Während Sicherheitsfäden, die bekanntermaßen aus mindestens einem folienartigen Trägersubstrat bestehen, auf denen die funktionellen Schichten aufgebaut sind, und vollständig ins Wertdokument eingebracht werden, sich mit etwas Geschick aufgrund ihrer Dicke und der Festigkeit des folienartigen Trägersubstrats aus dem Verbund herauspräparieren lassen, ist dies mit dem erfindungsgemäß hergestellten Transferelement nicht oder nur sehr erschwert möglich, da ein ausreichend dickes, festes folienartiges Trägersubstrat nicht vorliegt und sich das einzig aus den funktionellen Schichten bestehende Transferelement nicht mehr zerstörungsfrei aus dem Verbund herauspräparieren lässt.

Das Sicherheitspapier kann beispielsweise aus einem dreilagigen Verbund Papier / Kunststoff / Papier, Kunststoff / Papier / Kunststoff, Kunststoff / Kunststoff / Papier, Papier / Papier / Kunststoff oder einem zweilagigen Verbund Kunststoff / Papier oder Papier / Papier bestehen.

Die einzelnen Lagen bestehen dabei aus Papier, Baumwollpapier, Papier mit Anteilen von synthetischen, natürlichen, oder Regeneratfasern, synthetischem Papier, Kunststoffen, wie beispielsweise in EP 1 599 346 A geoffenbart, natürlichen Kunststoffen, wie beispielsweise PLA, modifizierter Stärke, aber auch Mischungen der vorgenannten Materialien, beispielsweise Baumwollpapier oder Zellulose angereichert mit synthetischen Fasern zur Erhöhung der Umlaufstabilität oder der Verschmutzungsresistenz. Ferner können die Papierlagen dem Fachmann bekannte Inhaltsstoffe wie Füllstoffe, Nassfestmittel, Massen- und Oberflächenleimungsmittel enthalten. Ferner können die Papierlagen bekannte Zusätze zur Erhöhung der mikrobakteriologischen oder virologischen Beständigkeit (Silberionen, etc.) sowie Sicherheitsmerkmale verschiedenster Art (Pigmente, Farbstoffe, Melierfasern etc.) enthalten.

Die Dicke der Papierlage(n) richtet sich im Wesentlichen nach der gewünschten Gesamtdicke und der Anzahl der Papierlagen im Verbund. Handelt es sich beispielsweise um einen Dreifachverbund Papier - Kunststoff - Papier mit einer Gesamtdicke von 100 µm, so liegen die Dicken der einzelnen Papierlagen im Bereich von 10 bis 50 µm, bevorzugt im Bereich von 20 bis 40 µm.

Auf eine innen liegende Oberfläche einer der Lagen des zwei- oder mehrlagigen Sicherheitspapiers wird ein Sicherheitselement in Form eines Transferelements aufgebracht.

Das Transferelement kann in Form eines Fadens, eines Streifens oder eines Patches vorliegen. Unter Transferelement in Form eines Fadens wird ein Transferelement verstanden, dessen Länge deutlich größer als seine Breite ist. Typischerweise erstrecken sich solche Transferelemente über die volle Länge oder Breite des Wertdokuments, also über einige Zentimeter, und weisen eine Breite von 0,5 - 6 mm auf. Streifen haben üblicherweise größere Breiten, etwa im Bereich von 6 - 30 mm. Die Ränder des Fadens oder Streifens sind in der Regel gerade und verlaufen parallel zueinander, können jedoch auch konturiert geschnitten werden und so einen schlangenlinienförmigen Verlauf nehmen bzw. wellige Ränder, Ausbuchtungen oder Einschnürungen an bestimmten Stellen sowie nicht parallele, gerade Ränder aufweisen.

Bei Bedarf können auch mehrere solche Transferelemente gleichzeitig in einem Wertdokument vorhanden sein, wodurch die Fälschungssicherheit nochmals deutlich erhöht wird.

Betrachtet man beispielsweise einen dreilagigen Verbund bestehend aus Papier / Kunststoff / Papier, so würde das Transferelement bevorzugt auf die Innenseite einer der Papierlagen aufgebracht werden. Wenn das Transferelement in Form eines Fadens konfektioniert ist und die Papierlagen auf beiden Seiten durchgängig sind, kann das Transferelement im fertigen Wertdokument praktisch nicht von einem herkömmlichen Sicherheitsfaden unterschieden werden. Aber selbst wenn eine der Papierlagen Unterbrechungen aufweist, könnte mit einem einseitig sichtbaren Transferelement ein sogenannter Fensterfaden simuliert werden, der periodisch an bestimmten Stellen an die Oberfläche des Papiers tritt.

Das Transferelement besteht dabei aus einer oder mehreren funktionellen Schichten, wobei das Transferelement dem Transferprozess auf einem Trägersubstrat aufgebracht zugeführt wird. Die Grenzfläche zwischen den funktionellen Schichten des Transferelementes und dem Trägersubstrat ist so gestaltet, dass eine Ablösung des Trägersubstrats vom Transferelement (Release) im Transferprozess möglich ist. Bei einem herkömmlichen Sicherheitsfaden ist das nicht der Fall, da dort eine möglichst gute und innige Verbindung zwischen dem/den folienartigen Trägersubstrat(en) und den funktionellen Schichten aus Gründen der Stabilität gegenüber mechanischen, physikalischen und chemischen Einflüssen besonders erwünscht ist. Die Oberfläche des Transferelementes, die dem Trägersubstrat abgewandt ist, trägt eine Klebebeschichtung, die im Transferprozess unter Druck und/oder erhöhter Temperatur und/oder Strahlung aktiviert wird und die Klebeverbindung des Transferelementes zur jeweiligen Lage des mehrlagigen Sicherheitspapiers sicherstellt. Aufder dem Trägersubstrat zugewandten Seite des Transferelements bzw. auf der dem Transferelement abgewandten Seite des Trägersubstrates befindet sich keine Klebebeschichtung. Bei der Applikation wird das Trägersubstrat abgezogen, sodass lediglich der Schichtaufbau auf der Lage des Sicherheitspapiers verbleibt.

Das Transferelement bildet aufgrund des fehlenden Trägersubstrats und demnach der geringen Dicke bevorzugt keine selbsttragende Schicht. Vielmehr übernimmt die Lage des Sicherheitspapiers, auf der das Transferelement appliziert wird, nach der Applikation die tragende Funktion. Ein herkömmlicher Sicherheitsfaden besitzt immer mindestens ein folienartiges Trägersubstrat, welches vor, während und auch nach der Einbringung in das Sicherheitspapier die Stabilität des Sicherheitselements gewährleistet. Das hat zur Folge, dass die Eigenschaften wie Dehnbarkeit, Reißfestigkeit und Durchstoßfestigkeit beim erfindungsgemäßen Transferelement niedriger sind als bei einem aus dem Stand der Technik bekannten Transferelement.

Die Dicke des Transferelements ergibt sich aus der Anzahl und Beschaffenheit der funktionellen Schichten und liegt im Bereich von 3 bis 25 µm, bevorzugt in einem Bereich von 3 bis 18 µm, insbesondere bevorzugt in einem Bereich von 6 bis 18 µm.

Als Trägersubstrate kommen Trägerfolien, vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PFA (Tetrafluorethylen-Perfluorpropylvinylether-Fluorcopolymer), MFA (Tetrafluor-methylen-Perfluorpropylvinylether-Fluorcopolymer), PTFE (Polytetra-fluorethylen), PVF (Polyvinylfluorid), PVDF (Polyvinylidenfluorid), und EFEP (EthylenTetrafluorethylen-Hexafluorpropylen-Fluorterpolymer) in Frage. Die Trägersubstrate weisen vorzugsweise eine Dicke von 5 bis 100 µm, bevorzugt 5 bis 36 µm auf.

Auf das Trägersubstrat wird eine erste Lackschicht aufgebracht, die releasefähig ist, das heißt, dass ihre Haftung zum Trägersubstrat geringer ist, als die Haftung der übrigen Schichten des Transferelements untereinander. Bei geeigneter Auswahl des Trägersubstrats hinsichtlich seiner Oberfläche und der Lackschicht kann ohne weitere Maßnahmen eine releasefähige Lackschicht hergestellt werden.

Als erste Lackschicht kommt dabei beispielsweise eine dünne Schicht auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 0 bis 130 Gewichts-% im Verhältnis zum Basispolymer betragen. Insbesondere werden aber auch strahlungshärtbare, beispielsweise UV- oder elektronenstrahlhärtbare Lackschichten oder Flüssigkristallschichten eingesetzt.

Gegebenenfalls kann diese erste Lackschicht auch bereits Sicherheitsmerkmale, wie Sicherheitspigmente oder -farbstoffe, beispielsweise färbige, wärmeempfindliche, lumineszierende Pigmente oder -farbstoffe, geprägte Mikro- oder Makrostrukturen, Oberflächenreliefs, Beugungsgitter, Beugungsstrukturen, Hologramme, Linsenstrukturen, Moiréstrukturen und dergleichen aufweisen.

Trägt die erste Lackschicht Sicherheitsmerkmale in Form von Prägehologrammen, Mikrolinsen oder sonstigen Oberflächenreliefs, ist die erste Lackschicht bevorzugt eine thermoplastische Prägelackschicht, beispielsweise auf Basis von PMMA, oder eine UV-härtbare Prägelackschicht. Solche Schichten und deren Herstellung sind beispielsweise aus der EP 1 352 732 A oder der EP 1 310 381 A bekannt, deren Offenbarung hier ausdrücklich miteinbezogen wird.

Das Auftragsgewicht der ersten Lackschicht beträgt 1 bis 10 g/m², bevorzugt 1 bis 5 g/m².

Zusätzlich zur Einstellung der definierten Haftung zum Trägersubstrat hat die erste Lackschicht auch eine Schutzfunktion, da diese nach dem Transfer zuoberst liegt und bei der Weiterverarbeitung der Lage mit dem applizierten Transferelement mechanischen und/oder chemischen und/oder thermischen Belastungen ausgesetzt ist. Es ist daher von Vorteil, wenn die erste Lackschicht durch geeignete Formulierung des Lacks ausgezeichnete physikalische und chemische Beständigkeiten aufweist.

In einer anderen Ausführungsform kann die erste Lackschicht eine beliebige Lackschicht sein, wobei zwischen dieser Lackschicht und dem Trägersubstrat zusätzlich eine Releaseschicht aufgebracht ist. Diese kann beispielsweise aus dünnen Wachs- oder Silikonschichten bestehen und ermöglicht eine gezielte Einstellung der Haftung zwischen der ersten Lackschicht und dem Trägersubstrat. Beim Transferprozess wird die Releaseschicht mit dem Trägersubstrat abgezogen. Das Auftragsgewicht einer solchen Releaseschicht liegt in der Regel unter 0,5 g/m².

Das Transferelement kann weitere mono- oder multifunktionelle Schichten enthalten, die auch aus gängigen Sicherheitselementen bekannt sind.

Insbesondere bieten sich hier vollflächig oder partiell aufgebrachte Schichten aus Metallen, Metalllegierungen und -verbindungen an. Als Metallschicht sind Schichten aus Al, Cu, Fe, Ag, Au, Cr, Ni, Zn, Sn, Pt, Ti, Pd und dergleichen geeignet. Geeignete Legierungen sind beispielsweise Cu-Al Legierungen, Cu-Zn Legierungen und dergleichen. Geeignete Metallverbindungen sind beispielsweise Oxide oder Sulfide von Metallen, insbesondere TiO₂, Cr-Oxide, ZnS, Indium-Zinnoxid, Antimon-Zinnoxid, Antimon-Zinkoxid, FTO, ZnO, Al₂O₃ oder Siliziumoxide. Die metallische Schicht kann durch einen PVD- oder CVD-Prozess (Sputtern, Bedampfen), aufgebracht werden. Die Metallschichten können im sichtbaren und/oder infraroten und/oder ultravioletten Spektralbereich opak oder teildurchlässig sein bzw. transparent sein und einen hohen oder niedrigen Brechungsindex besitzen, um gezielte optische Schichtsysteme aufbauen zu können.

Bevorzugt sind in den Metallschichten Aussparungen in Form von Buchstaben, Zeichen, Symbolen, Linien, Guillochen, Zahlen oder Schriftzügen vorhanden, die bei Betrachtung im Durchlicht einen Kontrast ergeben. Geeignete Verfahren zur Herstellung solcher partieller Metallschichten sind beispielsweise in der DE 197 39 193 A oder der EP 1 332 238 A beschrieben.

Anstatt aufgedampfter Metallschichten können auch Druckfarben oder Lacke mit Metallpigmenten verwendet werden.

Weiters kann das Transferelement auch Farb- und/oder Lackschichten mit optischen, optisch variablen, magnetischen oder elektrisch leitfähigen Eigenschaften.

Als Farb- bzw. Lackschichten können jeweils verschiedenste Zusammensetzungen verwendet werden. Die Zusammensetzung der einzelnen Schichten kann insbesondere nach deren Aufgabe variieren, also ob die einzelnen Schichten ausschließlich Dekorationszwecken dienen oder eine funktionelle Schicht sein sollen oder ob die Schichten sowohl Dekorations- als auch funktionelle Schichten sein sollen.

Diese Schichten können pigmentiert oder nicht pigmentiert sein. Als Pigmente können alle bekannten Pigmente, wie beispielsweise Titandioxid, Zinksulfid, Kaolin, ITO, ATO, FTO, Aluminium, Chrom- und Siliciumoxide als auch farbige Pigmente verwendet werden. Dabei sind wässrige und lösungsmittelhaltige Lacksysteme genauso wie lösemittelfreie oder strahlungshärtende Systeme verwendbar.

Vorzugsweise sind die Pigmente in Acrylat-Polymerdispersionen mit einem Molekulargewicht von 150.000 bis 300.000, in Acrylat-Urethan-Dispersionen, Acrylat- Styrol oder PVC-haltigen Dispersionen oder in lösemittelhaltige derartige Dispersionen eingebracht.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und photochrome, wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Eine elektrische leitfähige Schicht kann eine metallische oder nicht metallische oder eine polymere leitfähige Schicht sein, wobei als metallische elektrisch leitfähige Schichten im Wesentlichen die bereits genannten metallischen Schichten in Frage kommen.

Es können aber auch mit Ruß, Graphit oder Silber pigmentierte Dispersionen oder Lösungen in Ethylenacrylatcopolymer. Nitrocellulose, PVB, PA, Acrylat oder PVC oder deren Copolymeren verwendet werden.

Der Pigmentanteil kann bis zu 90 % betragen, vorzugsweise kann der Bindemittelanteil 20 bis 70% betragen.

Eine polymere elektrisch leitfähige Schicht kann aus beispielsweise Polyacetylen, Poly-p-phenylen, Polypyrrole, Polythiophene, Poly-p-phenylenvinylen, niedermolekulare makrocyclische Halbleiter, Organopo-lysilane, Polyschwefelnitrid und/oder Polyaniline und/oder deren Derivaten gebildet sein. Bevorzugt werden als elektrisch leitfähige Polymere Polyanilin oder Polythiophene verwendet.

Die magnetischen Eigenschaften einer Schicht können durch paramagnetische, diamagnetische und auch ferromagnetische Stoffe, wie Eisen, Nickel und Cobalt oder deren Verbindungen oder Salze (beispielsweise Oxide oder Sulfide) oder Legierungen aus Seltenerdmetallen, wie beispielsweise Cobalt/Samarium-Legierungen eingestellt werden.

Besonders geeignet zur Erzeugung von magnetischen Sicherheitsmerkmalen sind Magnetpigmentfarben mit Pigmenten auf Basis von Fe-oxiden, Eisen, Nickel, Cobalt und deren Legierungen, Barium oder Cobalt-ferrite, hart- und weichmagnetische Eisen- und Stahlsorten in wässrigen bzw. lösungsmittelhaltigen Dispersionen. Als Lösungsmittel kommen beispielsweise i-Propanol, Ethylacetat, Methylethylketon, Methoxypropanol und deren Mischungen in Frage.

Vorzugsweise sind die Pigmente in Acrylat- Polymerdispersionen mit einem Molekulargewicht von 150.000 bis 300.000, in Acrylat-Urethan-Dispersionen, Acrylat- Styrol, Nitrocellulose oder PVC-haltigen Dispersionen oder in lösemittelhaltige derartige Dispersionen eingebracht.

Es können auch mehrere Schichten mit unterschiedlichen magnetischen Materialien kombiniert werden, wobei die magnetischen Merkmale unterschiedliche Koerzitivität und/oder Remanenz aufweisen können. Die Magnetschichten können vollflächig oder partiell, nebeneinander, übereinander, teilweise oder vollflächig überlappend bzw. in verschiedenen Ebenen des Transferelements aufgebracht sein.

Die oben beschriebenen Farb- oder Lackschichten werden mittels gängiger Beschichtungsverfahren auf das ggf. schon beschichtete Trägersubstrat aufgebracht. Als Beispiele seien hier Druckverfahren (Tief-, Flexo-, Sieb-, Offset-, Tampondruck), Raster- oder Glattwalzenauftragsverfahren, Schlitzdüsen-, Tauch-, Vorhangguss- und Extrusionsbeschichtungen genannt.

Generell sind alle möglichen Kombinationen von Sicherheitsmerkmalen in ein und demselben Transferelement möglich und können sowohl einzeln als auch in Kombination auftreten, um beispielsweise ein visuell erkennbares Sicherheitsmerkmal sowie ein maschinenlesbares, verstecktes Sicherheitsmerkmal zu kombinieren.

Der Aufbau kann abschließend oder in einer Zwischenschicht mit einer Schutzlackschicht versehen sein, die auch pigmentiert sein kann. Die Schutzlackschicht hat die Funktion, dass darunterliegende Schichten besser vor chemischen und physikalischen Einflüssen geschützt sind.

Im letzten Schritt wird auf das Transferelement eine Klebebeschichtung aufgebracht. Als Klebebeschichtungen kommen je nach Substrat, auf das das Transferelement appliziert werden soll, Heiß- oder Kaltsiegelklebebeschichtungen, Selbstklebebeschichtungen oder strahlungshärtbare Klebebeschichtungen in Frage.

Insbesondere bei der Applikation auf temperaturempfindliche Lagen des zwei- oder mehrlagigen Sicherheitspapiers ist die Verwendung eines strahlungshärtbaren Klebesystems von Vorteil. Zur Applikation auf Papier bzw. papierähnliche Lagen wird bevorzugt ein Heißsiegelkleber verwendet.

Zur Einbringung des Transferelements in das zwei- oder mehrlagige Sicherheitspapier wird das Transferelement mit der Klebebeschichtung in Kontakt mit einer innen liegenden Oberfläche des Materials gebracht, das eine Lage des Wertdokuments bildet.

Die Applikation des Transferelements kann seiten- und/oder längsregistergenau zu gegebenenfalls vorhandenen weiteren in oder auf einer Lage des mehrlagigen Sicherheitspapiers vorgesehenen Sicherheitsmerkmalen, wie beispielsweise Aufdrucken, Wasserzeichen und dergleichen oder zu gegebenenfalls vorhandenen Aussparungen in einer Lage erfolgen.

In einer besonderen Ausführungsform erfolgt die Anordnung des Transferelements in der Weise, dass das Transferelement in einer Ausnehmung einer darüber angebrachten Lage des Sicherheitspapiers oder in einer vorhandenen Durchbrechung sichtbar ist.

Die Applikation des Transferelements auf einer Lage des Sicherheitspapiers erfolgt unter Ablösung des Transferelements vom Trägersubstrat auf welchem das Transferelement zugeführt wird, in einem Transferprozess von Rolle zu Rolle oder von Bogen zu Bogen mit Hilfe geeigneter handelsüblicher Applikationsmaschinen. Je nach Art der Klebebeschichtung erfolgt die Applikation unter Einwirkung von Druck und/oder Temperatur und/oder UV- oder Elektronenstrahlung. Beim Transferprozess wird genauer gesagt die tragende Funktion des Trägersubstrats augenblicklich von der Papierlage übernommen, für das Transferelement an sich ist dann eine selbsttragende Funktion nicht zwingend notwendig.

Durch die Ablösung des Trägersubstrats beim Transfervorgang werden nur die Schichten mit den Sicherheitsmerkmalen mittels der Klebebeschichtung fest auf der inneren Oberfläche einer Lage des Sicherheitspapiers verankert. Bei der nachfolgenden Herstellung des mehrlagigen Sicherheitspapiers kommt es zu keinerlei Beschädigungen oder Veränderungen des Transferelements.

Die Dicke des transferierten Aufbaus beträgt < 20 µm, bevorzugt jedoch < 10 µm. Dies ist wesentlich geringer als ein handelsüblicher Sicherheitsfaden und in der Regel auch wesentlich geringer als die Dicken der Einzellagen des Verbundes. Wird das Transferelement unter Einwirkung von Druck und/oder erhöhter Temperatur auf eine Papierlage appliziert, wird beim Transfervorgang zudem das Papier lokal komprimiert, weshalb beispielsweise ein Transferelement mit 20 µm Dicke nicht wie erwartet werden könnte zu einer lokalen Verdickung von ebenfalls 20 µm führt, sondern allenfalls zu einer lokalen Verdickung von < 5 µm. Bereits durch die geringe Dicke des Transferelements, und zusätzlich durch die Komprimierung beim Transfervorgang, ist eine gleichmäßige Dicke des Wertdokuments über die gesamte Ausdehnung gewährleistet und führt nicht zu den eingangs genannten Problemen bei der Stapelung oder Aufrollung.

Um die Dickenhomogenität noch weiter zu verbessern, kann bereits vor der Applikation des Transferelements eine Vertiefung erzeugt werden, beispielsweise durch Kalandrierung im Bereich der späteren Applikation oder durch bewusste Ausdünnung einer Papierlage während der Papierherstellung.

Die Applikation kann sowohl auf eine durchgehende Lage des Sicherheitspapiers als auch auf eine Lage mit einer schon zuvor durch Stanzen, Schneiden oder ähnliche Prozesse erzeugte Durchbrechung aufgebracht sein. Das Transferelement überspannt dann die freibleibende Öffnung. Weiters kann die Lage nach der Applikation im Bereich des Transferelements gestanzt oder geschnitten werden, sodass sowohl die Lage des Sicherheitspapiers als auch das Transferelement selbst zumindest bereichsweise durchbrochen werden. Dadurch kann der Bereich des Fensters vollständig transparent bleiben und wird nicht durch das applizierte Transferelement gestört.

Nachdem nun in einem ersten Schritt die Applikation des Transferelements auf eine Lage des mehrlagigen Sicherheitspapiers erfolgt ist, wird diese Lage mit einer oder mehreren weiteren Lagen des Sicherheitspapiers verbunden. Dieser Vorgang kann von Bogen zu Bogen oder bevorzugterweise von Rolle zu Rolle erfolgen. Die Applikation des Transferelements kann im selben Arbeitsgang wie die Herstellung des mehrlagigen Sicherheitspapiers (in-line) oder in getrennten Arbeitsgängen (off-line) durchgeführt werden.

Die Verbindung der einzelnen Lagen erfolgt in der Regel im Spalt zwischen einem ggf. geheizten Walzenpaar, das Druck und/oder Temperatur auf den Verbund ausübt. Werden für eine oder mehrere Lagen Materialien verwendet, die einen ausreichend niedrigen Schmelzpunkt haben, sodass die anderen Materialien nicht zerstört werden, kann der Verbindungsprozess lediglich durch Einwirkung von Druck und Temperatur ablaufen, sodass eine beständige Verbindung erreicht wird. Besteht die Gefahr, dass die einzelnen Lagen durch eine zu hohe Temperatur zerstört werden, kann die Prozesstemperatur durch Verwendung eines Klebstoffes zur Verbindung der Lagen deutlich reduziert werden. Der Klebstoff kann bei Raumtemperatur trocknen bzw. aushärten oder bei deutlich niedrigeren Temperaturen als die Materialien der Lagen schmelzflüssig werden. Es können auch strahlungshärtende Klebstoffe verwendet werden, dann ist die Temperaturbelastung beim Verbindungsprozess am geringsten.

In einer bevorzugten Ausführungsform erfolgt die Herstellung des mehrlagigen Sicherheitspapiers durch eine sogenannte Extrusionskaschierung zweier oder mehrerer Lagen. Dabei wird zwischen zwei Lagen, die in der Regel aus Papier bestehen, ein schmelzflüssiges Polymer mittels einer Schlitzdüse eingebracht, die Lagen in einem Walzenspalt zusammengeführt und anschließend abgekühlt. Die extrudierte Lage stellt dann eine eigene Lage des Sicherheitspapiers dar. Ein derartiges Verfahren ist beispielsweise in der WO 2006/066431 A beschrieben, deren Inhalt hiermit vollumfänglich aufgenommen wird.

In den Figuren sind beispielhafte Ausführungsformen des erfindungsgemäß hergestellten Wertdokuments und des Transferelements dargestellt.

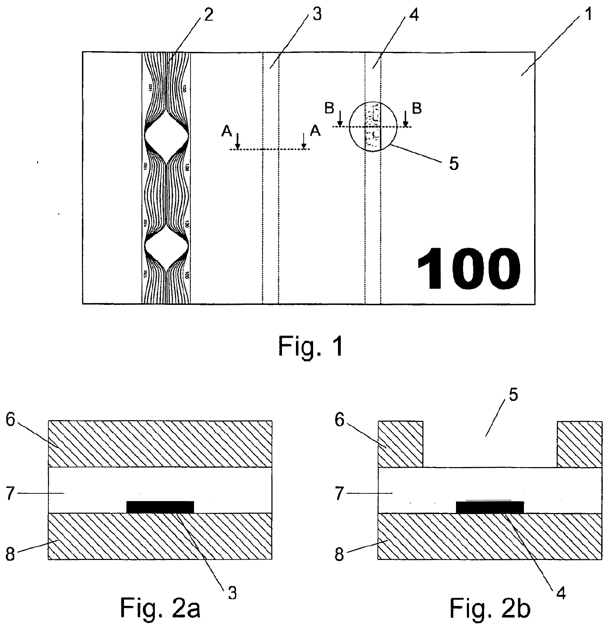

Fig. 1 zeigt ein erfindungsgemäß hergestelltes Wertdokument 1 mit einem herkömmlichen Hologrammstreifen 2, der auf der äußeren Oberfläche des Wertdokuments appliziert ist. Weiters besitzt das gezeigte Wertdokument zwei Transferelemente 3 und 4, die im Inneren des mehrlagigen Sicherheitspapiers angeordnet sind. Das Transferelement 3 ist vollständig zwischen opaken Papierlagen 6,8 eingebettet und daher nur im Durchlicht und nicht im Auflicht erkennbar, ähnlich einem herkömmlichen, vollständig eingebetteten Sicherheitsfaden. Das Transferelement 4 ist so eingebettet, dass es durch eine Aussparung 5 in der oberen Papierlage 6 an der Stelle der Aussparung 5 im Auflicht sichtbar ist. Im Bereich einer anderen Aussparung ist die untere Papierlage 8 samt appliziertem Transferelement 4 ebenfalls durchbrochen, sodass ein transparentes Fenster entsteht, wenn die Polymerlage 7 aus einem transparenten Material besteht.

Fig. 2a zeigt den Bereich des Transferelements 3 im Querschnitt entlang der strichpunktierten Linie A-A in Fig. 1. Das Wertdokument besteht in diesem Fall aus einer oberen Papierlage 6, einer Polymerlage 7 und einer unteren Papierlage 8. Das Transferelement 3 ist auf der unteren Papierlage 8 appliziert und beidseitig durch mindestens eine Papier- oder Polymerlage geschützt. Die unterschiedliche Dicke der unteren Papierlage 8 im Bereich des applizierten Transferelements 3 wird zum Teil durch eine etwas geringere Dicke der Polymerlage 7 ausgeglichen. Dennoch ist die Gesamtdicke des Wertdokuments 1 an der Stelle des eingebrachten Transferelements 3 nicht wesentlich unterschiedlich als außerhalb dieses Bereiches.

Fig. 2b zeigt das Wertdokument im Bereich der Aussparung 5 im Querschnitt entlang der strichpunktierten Linie B-B in Fig. 1. Auch in diesem Fall besteht das Wertdokument aus einer oberen Papierlage 6, einer Polymerlage 7 und einer unteren Papierlage 8. Die obere Papierlage 6 ist jedoch an der Stelle des Transferelements 4 durchbrochen (Aussparung 5), beispielsweise durch Stanzen oder Schneiden. Verwendet man nun für die Polymerlage 7 ein transparentes Polymer, so ist das Transferelement 4 im Auflicht von der Seite der oberen Papierlage 6 her sichtbar. Von der Rückseite ist das Transferelement 4 verborgen und kann nur im Durchlicht erkannt werden.

Im Gegensatz zu der Situation in Fig. 2b kann auch die untere Papierlage 8 samt appliziertem Transferelement 4 in Form einer Aussparung durchbrochen sein. Dies wird erreicht, indem die untere Papierlage 8 nach der Applikation des Transferelements 4 gestanzt oder geschnitten wird.

Gleichermaßen ist denkbar, dass beide Papierlagen 6 und 8 an der Stelle des Transferelements 4 ausgespart sind, das Transferelement 4 jedoch nicht und somit die Aussparung überbrückt. Das Transferelement 4 kann somit von beiden Seiten im Auflicht betrachtet werden. Die Aussparungen können auch versetzt in der oberen und unteren Papierlage angeordnet sein, sodass das Transferelement 4 sowohl an der Ober- als auch an der Unterseite des Wertdokuments 1 an verschiedenen Stellen im Auflicht sichtbar ist.

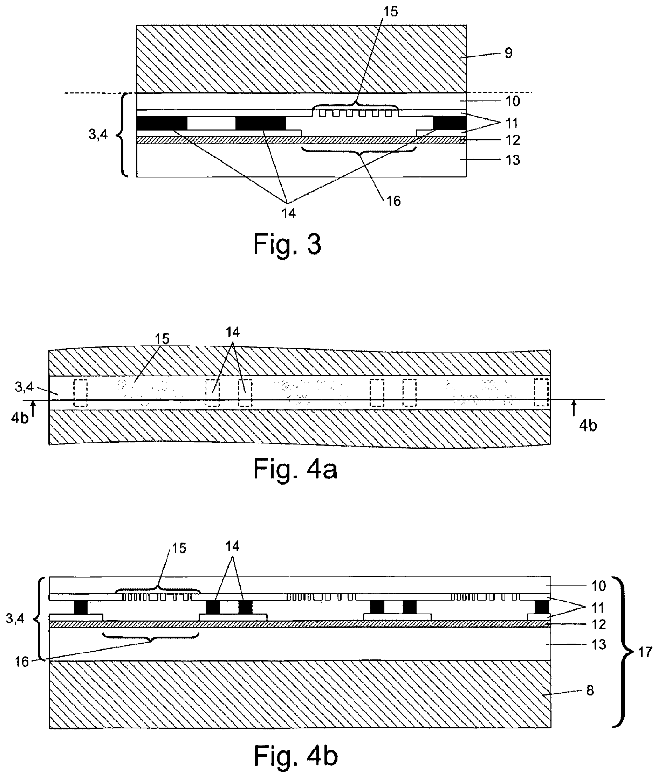

In Fig. 3 ist ein beispielhafter Aufbau eines Transferelements 3 bzw. 4 mit optischen und maschinenlesbaren Sicherheitsmerkmalen vor der Applikation gezeigt. Auf dem Trägersubstrat 9 befindet sich zunächst eine releasefähige Lackschicht 10. Anschließend folgt eine Metallschicht 11 mit Aussparungen 15 in Form von negativen Zeichen, Symbolen, Codierungen oder ähnlichen im Durchlicht erkennbaren Strukturen. In den nicht mit Aussparungen 15 versehenen Bereichen sind maschinenlesbare Strukturen, beispielsweise niedrigkoerzitive magnetische Bereiche 14 und hochkoerzitive magnetische Bereiche 14 vorhanden. Zur Abdeckung der in der Regel dunklen magnetischen Bereiche ist danach eine weitere reflektierende Metallschicht 11 aufgebracht, die Aussparungen 16 aufweist, die so angeordnet sind, dass im Durchlicht die Aussparungen 15 in der ersten Metallschicht 11 weiter sichtbar bleiben. Diese Schichtfolge wird mit einem Schutzlack 12 vor physikalischen und chemischen Angriffen geschützt. Schließlich ist eine Klebeschicht 13 aufgebracht, mit deren Hilfe das Transferelement auf einer Lage des Wertdokuments appliziert werden kann.

Der Zustand nach dem Applizieren des Sicherheitsmerkmals auf einer der Lagen des Wertdokuments ist in Fig. 4a in der Aufsicht und in Fig. 4b im Querschnitt gezeigt. Das Trägersubstrat 9 ist nach der Applikation nicht mehr vorhanden. In der Aufsicht sind die Aussparungen 15 in der Metallschicht 11 deutlich als Text "TEST" und Zahlen "100" erkennbar. Die magnetischen Bereiche 14 sind beidseitig vollständig von den beiden Metallschichten 11 bedeckt und somit optisch nicht von den unmagnetischen metallisierten Bereichen unterscheidbar, sondern lediglich mit geeigneten Lesegeräten zu detektieren. Die Papierlage mit appliziertem Transferelement 17 wird nun dazu verwendet, um das mehrlagige Sicherheitspapier für das Wertdokument 1 herzustellen.

Ein weiteres, bereits auf eine Papierlage appliziertes, erfindungsgemäß zu verwendendes Transferelement mit optischen Eigenschaften kann wie folgt aufgebaut sein: Das Transferelement besitzt drei Sicherheitsmerkmale in Form einer Beschichtung mit Farbkippeffekt, einer partiell gedruckten fluoreszierenden Beschichtung in Form des Textes "100" und einem farbigen Mikrodruck in Form des Textes "TEST". Betrachtet man das Transferelement bei Tageslichtbedingungen, so zeigt sich an den Stellen, an denen die Beschichtung mit Farbkippeffekt sichtbar ist, eine blickwinkelabhängig unterschiedliche Färbung. Typische Farbübergänge solcher Beschichtungen wechseln beispielsweise von Magenta nach Grün bzw. von Grün nach Blau. Die Beschichtung mit Farbkippeffekt besteht beispielsweise aus 3 Schichten: Einer elektromagnetische Wellen reflektierenden Schicht, einer transparenten Abstandsschicht und einer Schicht aus metallischen Clustern. Über die optischen Eigenschaften der Einzelschichten und die definierte Dicke der Abstandsschicht kann der gewünschte Farbkippeffekt eingestellt werden. Details zur Funktionsweise solcher Schichtaufbauten sind beispielsweise der EP 1 716 007 A zu entnehmen. Der gedruckte Text ist mit einer zu den Farben der Beschichtung mit Farbkippeffekt verschiedenen Farbe (z.B. einem deckenden Weiß) gedruckt. Der Test ist somit unter Tageslichtverhältnissen klar als solcher erkennbar und wechselt seine Farbe bei Änderung des Blickwinkels nicht. Beleuchtet man das Transferelement mit UV-Strahlung, so emittiert die fluoreszierende Beschichtung Strahlung im sichtbaren Spektralbereich. Das Transferelement kann somit einerseits leicht mit freiem Auge über die Beschichtung mit Farbkippeffekt und den Mikrodruck verifiziert werden und bietet zusätzlich durch die fluoreszierende Beschichtung eine zweite Sicherheitsebene, die auch von Laien mit einfachen Mitteln aktiviert werden kann. Ein solches Transferelement ist besonders attraktiv, wenn es mit einer Aussparung in einer der Lagen des Wertdokuments kombiniert wird und somit an dieser Stelle gut sichtbar ist.

Ein weiteres erfindungsgemäß hergestelltes Wertdokument kann einerseits einen auf der äußeren Oberfläche applizierten Hologrammstreifen und andererseits ein Transferelement umfassen, das in zwei Bereichen durch Aussparungen in der oberen Papierlage sichtbar ist. Das Transferelement besitzt an zwei Stellen Ausbuchtungen, einmal in eckiger und einmal in elliptischer Form. Die Form des Transferelements wird bereits bei dessen Herstellung durch einen konturierten Zuschnitt festgelegt. Im Bereich der Aussparungen können sich sichtbare und unsichtbare Transferelemente befinden. Durch diese Methode kann die Fläche des Fensters besser genutzt werden, wobei in dem Bereich, in dem das Sicherheitsmerkmal vollständig eingebettet ist, wiederum der Eindruck eines herkömmlichen Sicherheitsfadens entsteht.

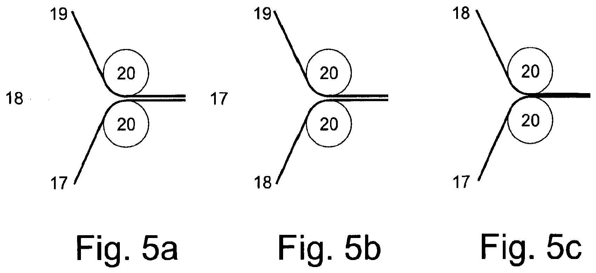

Die verschiedenen Arten der Herstellung des Verbundes sind in Fig. 5a - 5c dargestellt. Die Papierlagen mit appliziertem Transferelement 17, die Polymerlage und die Papierlage ohne Transferelement werden zwischen einem Walzenpaar 20 unter Einwirkung von Druck und/oder Temperatur und/oder Strahlung zusammengefügt. Die zuvor hergestellte Papierlage mit Transferelement 17 kann nun entweder eine der äußeren Lagen des Verbundes (Fig. 5a) oder die zentrale der drei Lagen eines Verbundes (Fig. 5b) darstellen. Wichtig ist immer, dass sich das Transferelement auf einer der innerhalb des Verbundes liegenden Oberflächen befindet. Fig. 5c zeigt einen Zweifach-Verbund bestehend aus einer Lage mit Transferelement 17 und einer weiteren Lage 18.
Beispielaufbau 1 (maschinenlesbares Transferelement, vgl. Fig. 4a und 4b):
   Trägerfolie PET 23 µm
   Transferlack UV-härtend, Auftragsgewicht 3 g/m², relasefähig
   Partielle Metallisierung 2,0 OD
   Haftprimer, Auftragsgewicht 0,5 g/m²
   Niedrigkoerzitive Magnetfarbe, partiell gedruckt Druckfarbe mit Metallpigmenten, Auftragsgewicht 1,5 g/m²
   Heißsiegellack, Auftragsgewicht 10 g/m²
Beispielaufbau 2 (optisch variables Transferelement, vgl. Fig. 5a und 5b):
   Trägerfolie PET 19 µm
   Transferlack auf Basis eines Cycloolefincopolymers, 4 g/m², releasefähig
   Partielle Bedruckung mit schwarzer Druckfarbe Partielle Bedruckung mit blau fluoreszierender Druckfarbe
   Schicht aus Aluminium-Clustern, nominelle Dicke 3 nm
   Abstandsschicht aus UV-härtendem Lack, Dicke 550 nm
   Reflexionsschicht aus 2,0 OD Aluminium, aufgedampft
   Heißsiegellack, Auftragsgewicht 8 g/m²
Beispielaufbau 3 (Substratverbund mit integriertem Transferelement):
   Sicherheitspapier mit Wasserzeichen, Flächengewicht 35 g/m²
   Darauf appliziertes Transferelement gemäß Beispiel 1 oder 2, ohne Trägerfolie
   Polymerkern aus Polyamid, Dicke ca. 30 µm
   Sicherheitspapier mit Wasserzeichen, gestanzt, Flächengewicht 35 g/m²

## Patentansprüche

1. Verfahren zur Herstellung eines Sicherheitspapiers für Wertdokumente (1) mit einem zumindest teilweise eingebetteten Transferelement, **dadurch gekennzeichnet, dass** das Transferelement in einem ersten Schritt auf einem Trägersubstrat zugeführt und auf eine innere Oberfläche einer Lage des Sicherheitspapiers unter Ablösung des Trägersubstrats appliziert und mittels einer Klebebeschichtung fixiert wird, und anschließend in einem oder mehreren nachfolgenden Schritt(en) eine oder mehrere weitere Lage(n) mit dieser ersten Lage verbunden werden, wobei zumindest eine der Lagen des Sicherheitspapiers mindestens eine Ausnehmung aufweist durch die das Sicherheitselement sichtbar ist, wobei das Transferelement seiten-und/oder längsregistergenau zu der mindestens einen Ausnehmung situiert ist und vorzugsweise in wenigstens teilweiser Überlappung dieser Ausnehmung situiert ist.

2. Verfahren nach Anspruch 1, **dadurch gekennzeichnet, dass** die beiden Schritte in-line oder off-line durchgeführt werden.

3. Verfahren nach einem der Ansprüche 1 oder 2, **dadurch gekennzeichnet, dass** die Applikation des Transferelements von Rolle zu Rolle oder Bogen zu Bogen erfolgt.

4. Verfahren nach einem der Ansprüche 1 bis 3, **dadurch gekennzeichnet, dass** die Applikation des Transferelements registergenau zu einem Wasserzeichen, einem Aufdruck und/oder einer Ausnehmung in zumindest einer der Lagen des Sicherheitspapiers erfolgt.

5. Verfahren nach einem der Ansprüche 1 bis 4, **dadurch gekennzeichnet, dass** die Lagen des Sicherheitspapiers mittels einer Extrusionskaschierung verbunden werden.

6. Verfahren nach einem der Ansprüche 1 bis 5, **dadurch gekennzeichnet, dass** die Lagen des Sicherheitspapiers mittels eines Kaschierklebers verbunden werden.

7. Verfahren nach einem der Ansprüche 1 bis 5, **dadurch gekennzeichnet, dass** die Lagen des Sicherheitspapiers mittels einer Laminierung ohne Kleber verbunden werden.

8. Verfahren nach einem der Ansprüche 1 bis 7, **dadurch gekennzeichnet, dass** die Herstellung des mehrlagigen Verbundes unter Einwirkung von Druck und/oder Temperatur und/oder UV- oder Elektronenstrahlung erfolgt.

## Claims

1. A process for producing a security paper for value documents (1) having an at least partially embedded transfer element, **characterized in that** the transfer element is fed in a first step on a carrier substrate and is applied to an inner surface of a layer of the security paper thereby detaching the carrier substrate, and is fixed by means of an adhesive coating, and, subsequently, in one or more subsequent step(s), one or more further layer(s) are bonded to this first layer, where at least one of the layers of the security paper has at least on recess through which the security element is visible, the transfer element is situated in exact register laterally and/or longitudinally to the at least one recess, and the transfer element is preferably situated in at least partial overlapping with the at least one recess.

2. The process as claimed in claim 1, **characterized in that** the two steps are carried out in-line or off-line.

3. The process as claimed in one of claims 1 or 2, **characterized in that** the application of the transfer element proceeds from roll to roll or sheet to sheet.

4. The process as claimed in any one of claims 1 to 3, **characterized in that** the application of the transfer element proceeds in exact register to a watermark, an imprint and/or a recess in at least one of the layers of the security paper.

5. The process as claimed in any one of claims 1 to 4, **characterized in that** the layers of the security paper are bonded by means of an extrusion lamination.

6. The process as claimed in any one of claims 1 to 5, **characterized in that** the layers of the security paper are bonded by means of a laminating adhesive.

7. The process as claimed in any one of claims 1 to 5, **characterized in that** the layers of the security paper are bonded by means of a lamination without adhesive.

8. The process as claimed in any one of claims 1 to 7, **characterized in that** the production of the multilayer composite proceeds under the action of pressure, and/or temperature, and/or UV- or electron radiation.

## Revendications

1. Procédé de fabrication d'un papier de sécurité pour des documents de valeur (1) comportant un élément de transfert au moins partiellement incorporé, **caractérisé en ce que**, dans une première étape, l'élément de transfert est amené sur un substrat de support et appliqué sur une surface intérieure d'une couche du papier de sécurité, en détachant le substrat de support, et est fixé au moyen d'un revêtement adhésif, puis, dans une ou plusieurs étapes suivantes, une ou plusieurs autre(s) couche(s) est/sont liée(s) à cette première couche, au moins une des couches du papier de sécurité présentant au moins un évidement à travers lequel l'élément de sécurité est visible, l'élément de transfert étant situé en repérage latéral et/ou longitudinal exact par rapport audit au moins un évidement et de préférence situé en chevauchement au moins partiel avec cet évidement.

2. Procédé selon la revendication 1, **caractérisé en ce que** les deux étapes sont effectuées en ligne ou hors ligne.

3. Procédé selon l'une des revendications 1 ou 2, **caractérisé en ce que** l'application de l'élément de transfert s'effectue de rouleau à rouleau ou de feuille à feuille.

4. Procédé selon l'une des revendications 1 à 3, **caractérisé en ce que** l'application de l'élément de transfert est effectuée en repérage exact sur un filigrane, une impression et/ou un évidement dans au moins une des couches du papier de sécurité.

5. Procédé selon l'une des revendications 1 à 4, **caractérisé en ce que** les couches du papier de sécurité sont liées au moyen d'un contrecollage par extrusion.

6. Procédé selon l'une des revendications 1 à 5, **caractérisé en ce que** les couches du papier de sécurité sont collées au moyen d'un adhésif de contrecollage.

7. Procédé selon l'une des revendications 1 à 5, **caractérisé en ce que** les couches du papier de sécurité sont collées au moyen d'un laminage sans adhésif.

8. Procédé selon l'une des revendications 1 à 7, **caractérisé en ce que** la fabrication du composite à plusieurs couches a lieu sous l'action de la pression et/ou de la température et/ou d'un rayonnement UV ou électronique.
